# EUROPEAN PATENT APPLICATION

(11) **EP 1 990 754 A1**
(43) Date of publication of application: **12.11.2008**
(21) Application number: 08102017.4
(22) Date of filing: 26.02.2008
(51) Int. Cl.: G06F 21/00

(54) **Apparatus for storing and handling electronic documents and system for storing and handling of electronic documents comprising one or more said apparatuses**

(30) Priority: 27.02.2007 IT MI20070369
(71) Applicant: Archivist. S.R.L., 41012 Carpi (MO) (IT)
(72) Inventor: Vottero, Daniele, 41012 Carpi (Modena) (IT)
(74) Representative: Baroni, Matteo

(57) **Abstract**

An apparatus for storing and handling electronic documents, comprising: a memory (10) for storing one or more electronic documents; a storage medium (200) divided into at least one clear partition (201) containing a loader (201a) and a first kernel (201b), and an enciphered partition (202, 203) containing at least part of an operating system (202a, 203a); a connection interface (210) for connecting an external device to said apparatus (1); the first kernel (201b) is provided to activate an execution module (320a) residing on an auxiliary device (300) adapted to be connected to the interface (210). The auxiliary device (300) is provided with: a CPU (320), incorporating said execution module (320a); a first storage register (330), directly accessible by said apparatus (1); a second storage register (340), only accessible through said CPU (320); the second register (340) contains one or more cryptography keys (k1, k2) to decode the enciphered partition (202, 203).

## Description

The present invention relates to an apparatus for storing and handling electronic documents. The invention also relates to a storing and handling system for electronic documents comprising one or more of said apparatuses.

In the present context by "electronic documents" it is intended any type of data processing documents (consisting of a textual part and/or a graphic and/or an audio and/or a video part) and any type of information contained in these documents.

In particular, by way of non-limiting example, reference will be made to documents and data concerning management and administration of firms and any type of business concerns.

It is known that it is presently greatly felt the need to create files of the electronic type at the inside of firms and keep them updated. These files are typically adapted to contain documents concerning the correspondence addressed to or concerning the company or firm, inclusive of documents of the accounting and administrative type that must be stored following predetermined criteria. Let us think for example of the correspondence consisting of the typical operating flows of a company inclusive of estimates sent, orders received, invoices issued, etc.

A further requirement within this particular field refers to remote access to the different documents or data that must be available to the responsible staff even when said staff is not at the inside of the firm.

In this connection, documents and data are often required to be characterised by a remote accessibility of the selective type, so that different operators, depending on the position they occupy, will be able to remotely take advantage of the use of different documents.

Presently, the requirements briefly described above are met by means of high-level application software solutions that, in order to be able to operate correctly and provide the users with all desired functional qualities, must be provided with many other hardware/software components (servers, peripherals, operating systems, database servers, web servers, etc.).

However, these components are typically added one at a time, in succession, and for each intervention they require checking of pre-requirements, activity of installation, configuration and integration, optimisations, and solution of the different technical problems that may appear each time.

Clearly, all the above results in important losses of time, risks of poor compatibility between the different components (above all if bought and installed all together), and in an important complexity increase in carrying out integration with external and peripheral applications of various types.

Accordingly, the present invention aims at providing an apparatus and a system for storing and handling electronic documents that reduces times and costs for activation and maintenance to an important degree.

Another aim of the invention is to ensure high security and reliability levels as to the stored data.

The foregoing and further aims are substantially achieved by the apparatus and system according to the features recited in the appended claims.

Further features and advantages will become more apparent from the detailed description of a preferred but not exclusive embodiment of an apparatus and a system in accordance with the present invention.

This description is taken with reference to the accompanying drawings, also given by way of non-limiting example, in which:
- Fig. 1 is a block diagram_of an apparatus in accordance with the present invention;
- Fig. 2 is a block diagram of a system according to the present invention;
- Fig. 3 is a block diagram showing further aspects of the apparatus of the invention.

With reference to the drawings, an apparatus in accordance with the present invention has been generally identified by reference numeral 1.

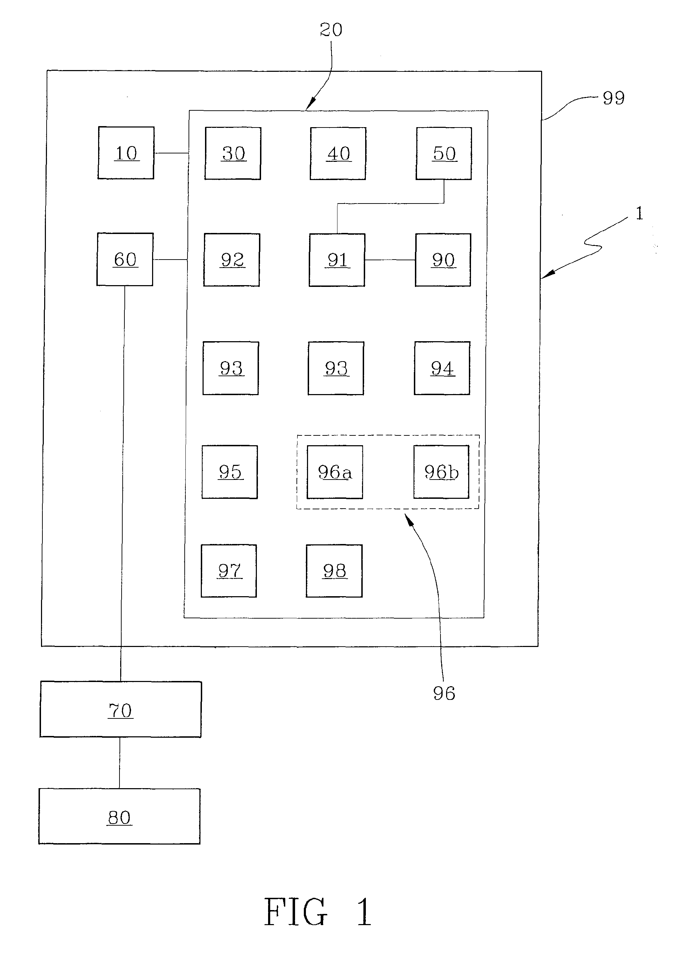

Apparatus 1 (Fig. 1) first of all comprises a memory 10 for storing one or more electronic documents.

As above mentioned, in the present context "electronic document" means any type of digital, textual, numeric, figurative, audio or video information, etc.

In particular, the invention can apply to the field of business management, in which the different documents, correspondence, etc. concerning the firm's activity can be electronically stored and handled.

Preferably, associated with each document being stored, is a record of information items describing this document; the record can contain a unique identification code of the document; a field in which it is entered the date at which the document was made, issued or received; a field in which the type of document is summarised by a key word (e.g. estimate or budget, invoice, note, etc.); for instance, in the case of a DDT (document of transport), fields can be provided for corporate name, supplier's identification code, amount, lines for the details, etc.

Associated with the record is the true electronic document, to enable the assembly of information to be complete and of easy reading within the memory.

Apparatus 1 further comprises a processing unit 20 of which at least one operating system 30, a database management system 40 (or DBMS) and a web server 50 are part.

The task of the operating system 30 is to enable handling of the different hardware/software sources installed on board apparatus 1. By way of example, the operating system 30 used can be of the Linux Debian or Ubuntu type.

The DBMS 40 is used for organisation, management and search of documents stored in memory 10. This DBMS preferably is of the relational type; by way of example a MySql system can be used.

The web server 50 allows a remote connection between apparatus 1 and at least another computer, so as to enable the latter to have an at least partial access to the documents stored in memory 10. By way of example, an Apache web server can be used.

The modalities according to which apparatus 1 can be connected to the Internet network and then to other computers will be more apparent in the following, when the storage system of which apparatus 1 can be part is described.

Apparatus 1 further comprises an interface 60 for connection with a computer's local area network 70; this interface is preferably of the Ethernet type.

The local area network (or LAN) 70 to which apparatus 1 is interfaced typically is a network of the firm comprising the machines of the different users being part of the firm itself.

These local machines allow access, preferably of the selective type, to the contents of memory 10 of apparatus 1; in fact, depending on the position occupied and the role held by them, the different local users can be allocated different levels of accessibility to the electronic documents stored in the memory.

The local area network 70 in which apparatus 1 is inserted has a connection to the Internet 80 so that the web server 50 of apparatus 1 can be connected to said Internet network following rules and modes to be described in the following.

Apparatus 1 also comprises a housing body 99 in which at least the hardware/software elements being part of the processing unit 20 are contained as well as, preferably, all hardware/software components included in apparatus 1.

In other words, a single machine is made which has all the above listed features, such studied that they co-operate without conflicts or problems of mutual coexistence within one and the same computer.

In particular, versions of the different software elements installed (those to be described in the following being included) are selected that can operate simultaneously in an optimal manner, without creating problems or malfunctions to the machine or the system.

In this way, once a performing apparatus provided with all necessary hardware/software components has been made, the same can be positioned where required (i.e. it can be connected to a LAN of the concerned firm or company through its own interface, for example) for performing the different activities concerning document storage and handling.

Thus, it is possible to avoid the great number of problems due to partial installations carried out at even very far-off moments in time of software packages that may not be (fully or only partly) compatible with each other.

Depending on requirements, apparatus 1 can be implemented following different embodiments.

A first model can be provided with an 80Gb hard disk, a 10/100 Mbs network card and a cd/dvd writer.

A second model can be provided with two (in mirror) 250Gb hard disks, a 10/100/1000Mbs network card and a cd/dvd writer.

A third model can be made as a server machine having high-profile performances and features and to be used in applications requiring high-quality performances.

Advantageously, the cd/dvd writer can be used for legal-value exportation aiming at carrying out the substitute storage of documents; this activity can be handled by the module denoted at 97 in the diagram in Fig. 1.

Preferably, the processing unit 20 of apparatus 1 further comprises a first operating module 90 defining an environment that supports programming in an object-programming language.

For instance, the object-programming language used can be the C# (or "C sharp") and/or C++ language, and the environment enabling this type of programming can be a Mono environment.

The processing unit 20 may further comprise a connecting module 91 to enable a co-operation between the first operating module 90 and said web server 50 present in apparatus 1.

By way of example, in case of use of an Apache web server 10 and a Mono environment 90 for C# programming, the connecting module 91 can be a Mono Apache Server component.

Preferably, the processing unit 20 further comprises a second operating module 92 allowing ASP.NET and/or php pages to be handled in a web environment; for instance, this second operating module 92 can be a Mono Xsp component.

In the preferred embodiment, the processing unit 20 further comprises one or more auxiliary modules 93 for carrying out automatic activities on the electronic documents received from apparatus 1 and/or stored in the memory.

The auxiliary modules, also called "agents" are provided to perform predetermined activities, within the operating field of apparatus 1, depending on the preset programs and/or as a function of occurrence of asynchronous events.

By way of example only, shown in Fig. 1 are two auxiliary modules 93 the first of which can be provided for automatic acquisition of documents from printing spool from a remote system, while the second can have the task of acquiring search keys from an operational software or other external application, together with coupling with documents identified by the bar code.

Preferably, the processing unit 20 further comprises a bar code reading module 94, provided for identification and recognition of the bar codes present on said electronic documents.

The information interpreted by recognition of the bar code positioned on an electronic document are then inputted in the record associated with such a document, and help in identifying the same, when necessary, putting a further search key at the users' disposal for retrieval of the stored documents.

Preferably, the processing unit 20 can also comprise a module 98 provided for carrying out processing of the OMR (Optical Mark Recognition) type and/or ICR (Intelligent Character Recognition) type.

Preferably, the processing unit 20 further comprises an integration module 95 for directly connecting one or more electronic documents to an electronic-mail handling program following a command entered by a user.

In other words, the integration module 95 allows one or more electronic documents to be directly enclosed, by a single command for example entered by means of a mouse, with an outgoing electronic-mail message, thus avoiding navigation in the database structure through the typical window for adding enclosures to an e-mail message.

For the purpose of ensuring the necessary confidential character of the information handled by apparatus 1, the processing unit may further comprise a security module 96 for protection of the processing unit 20 and/or of the electronic documents stored in memory 10.

The security module 96 can first of all comprise detecting means 96a for detection of a smart card, preferably of the usb type, said detecting means 96a being active on the processing unit 20 to activate the latter, should a predetermined smart card be recognised and deactivate the processing unit 20 should not said predetermined smart card be recognised.

In other words, use of the software resources of apparatus 1 is only allowed to a user capable of being authenticated through his/her own smart card.

Said security module 96 can further comprise a coding/decoding block 96b to code/decode the electronic documents stored in memory 10.

Preferably, the key (or keys) used by the coding/decoding block 96b is/are directly stored into said smart card. Therefore, the detecting means 96a is active on the smart card to read thereon both the user's identification data and one or more cryptography keys to supply the coding/decoding block 96b with the same so that, once the user's correct authentication with a valid smart card has taken place, he/she can also accede to the database contents without encountering further security measures.

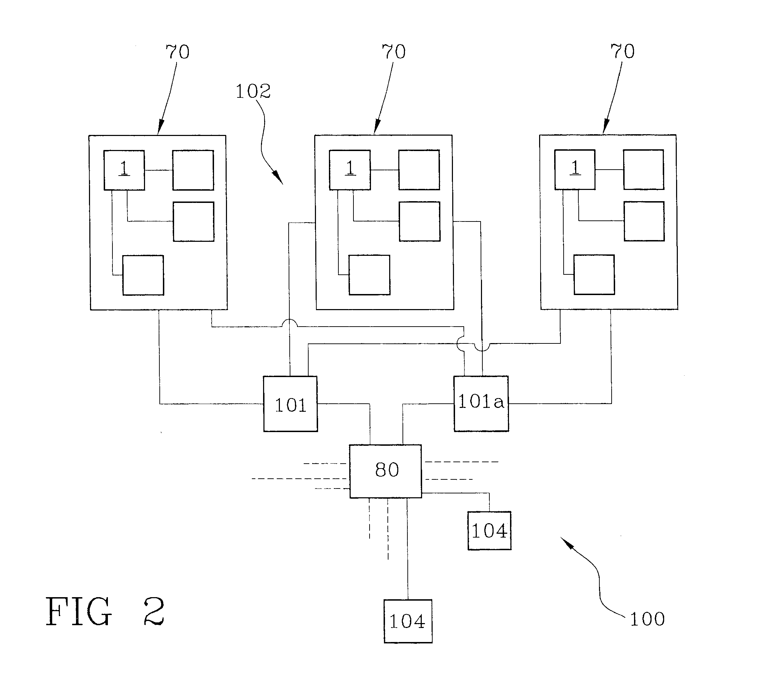

As mentioned above, apparatus 1 can be inserted into a wider system 100 (Fig. 2) in which a plurality of apparatuses are connected to a main computer 101 so as to define a VPN (Virtual Private Network) 102 based on the Internet network 80.

In other words, a "private" network is created that uses a public transmission means.

In order to keep the communication between the machines belonging to this VPN 102 confidential, suitable security protocols are used, such as the SSL/TSL and/or X509 PKI protocol as regards authentication, and the IPSec, ESP and EVP protocols as regards cryptography of the transported data, HMAC-SHA1 as regards tunnel authentication.

Preferably, each apparatus 1 being part of system 100 is inserted into a local area network 70 connected to the main computer 101 via the Internet network 80; more particularly, each apparatus can be reached, via the Internet network 80, only through the main computer 101.

In addition, the main computer 101 is provided with a reverse proxy module to enable selective access to apparatuses 1 by possible remote users 104 that would wish to reach these machines.

A further security level implemented in system 100 consists in that the electronic documents stored in each apparatus 1 are selectively accessible, following predetermined rules and/or hierarchies, to computers remotely connected via the main computer 101.

This means that, while documents stored in a given apparatus 1 can be remotely accessible to a user being part of the firm in which this apparatus 1 is installed, the same documents could not be accessible to an external technician who has the power to intervene on the machine for carrying out maintenance operations for example, or remote setting of the machine itself.

In other words, through the Internet any network user can reach the main computer 101; depending on the identity of this user, either he/she can be allowed to partly or fully accede to one or more apparatuses 1 and the contents stored therein, or access thereto can be fully denied to him/her.

Should at least partial access to one apparatus 1 be allowed to a user, the web server 50 installed in said apparatus will carry out exchange of information and data packages through the main computer 101.

In short, it is possible to state that apparatus 1 has the following security levels.
1. A "physical" level consisting of seals placed on the housing body 99 which prevent physical access to the inside of the apparatus.
2. A "system" level consisting in use of the above mentioned smart card, in combination with an activation signal that is transmitted by the main computer 101 to apparatus 1, without which signal, apparatus 1 does not perform any of its functions; in more detail, once a user has been authenticated through the smart card, apparatus 1 asks the main computer 1 an authorisation to start its activity. Should not the main computer 101 reply through the activation signal, apparatus 1 would remain disabled.
3. A "network" level, defined by the fact that apparatus 1, after being suitably activated, is only visible by the other machines being part of the local area network 70 and by the remote users 104 authorised by the reverse proxy module installed on board the main computer 101.
4. A fourth level consisting in that, upon the first activation of apparatus 1 subsequent to installation of the machine at the firm's network, the user of apparatus 1 enters a password (in particular, a pass phrase) that is to be entered each time a user whatever will wish to accede to the database contents. Generally, this password is not known to the technicians outside the firm and for this reason these technicians can only accede to the structure of apparatus 1 and operate thereon and not on the contents of memory 10.
5. An application level, according to which any user (be he/she a local, remote, etc. user) asking for access to apparatus 1, is required to be authenticated by his/her username and a password; then, depending on the type of user, an individualised access to the different resources of apparatus 1 is granted.

In the preferred embodiment, the main computer 101 is coupled to an auxiliary computer 101a having the same structural and operating features as the main computer and connected to the apparatuses 101 of system 100 following the same modalities as the main computer 101. This solution aims at providing more reliability to system 100 and substantially halving the risk of fully interrupting operation of the system itself.

In addition or as an alternative to the above, as regards security, it is to be pointed out the following.

When apparatus 1 is switched on, the BIOS carries out a control of the available peripherals and then goes on seeking for a loader 201a stored on a first partition 201 of a storage medium 200 of apparatus 1.

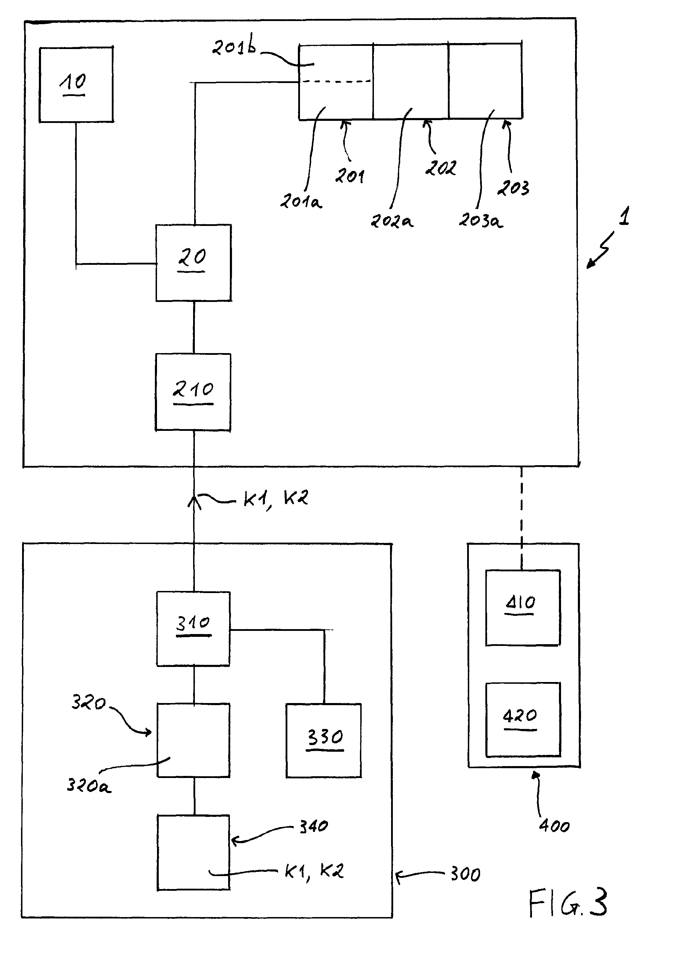

Fig. 3 shows some of the technical features herein described; it is to be noted that Fig. 3 is not an alternative to Fig. 1, but merely shows different aspects of the invention.

Preferably, the first partition 201 can have sizes of about 10Mb.

The storage medium 200 can for example be a hard disk, a flash disk, a ROM, an EPROM, a CD-ROM, a DVD or an equivalent medium adapted to contain the herein described data.

It is also provided for the storage medium 200 to be able to comprise physical devices distinct from each other, such as an EPROM and a hard disk.

Generally, different data portions can be stored on physically distinct devices being part of the storage medium 200. For instance, loader 201a and a first kernel 201b to be better described in the following, can be stored on an EPROM, while a second kernel 202a, libraries 203a, libraries or DLLs 203b, application software 203c can be stored on a hard disk.

Loader 201a in turn carries out loading of the first kernel 201b, stored in the memory partition 201. The first kernel, after due checking and after asking for an activation code to an auxiliary device 300 (to be better described in the following), activates a second partition 202 and passes the control to a second kernel 202a present on the second partition 202.

Finally, the second kernel 202a, after further checking on the available peripherals, carries out loading of libraries 203a, DLLs or libraries 203b, application software 203c present in a third memory partition 203.

Advantageously, the second and/or third partitions 202, 203 are provided to be encrypted in order to increase the system security and confidential character.

This encrypting activity is performed by use of a suitable algorithm and one or more cryptography keys k1, k2 associated with such an algorithm. By way of example, a symmetric-key "triple des" algorithm and/or a public-private key RSA algorithm can be used.

Advantageously, said one or more keys k1, k2 are stored in an auxiliary device 300. The auxiliary device 300 comprises an interface 310 for a connection to apparatus 1. Interface 310 is preferably of the USB (Universal Serial Bus) type.

Apparatus 1 in turn is provided with an interface 210 for connection to the auxiliary device. Preferably, interface 210 of apparatus 1 is of the USB (Universal Serial Bus) type.

Advantageously, communication between apparatus 1 and the auxiliary device 300 is handled by the above mentioned processing unit 20.

The auxiliary device 300 further comprises a first public storage register 330 directly accessible by apparatus 1 when the latter is connected to the auxiliary device 300.

The auxiliary device 300 further comprises a CPU 320. The auxiliary device 300 also comprises a second storage register 340 associated with the CPU 320 and only accessible through said CPU 320.

Advantageously, said one or more cryptography keys k1, k2 are stored in the second storage register 340.

Practically, the auxiliary device 300 is an USB device that, in addition to having a "public" memory (i.e. the first storage register 330) that is made available to apparatus 1 either for reading of the data items therein stored or storage of further files), is also provided with a "private" memory (i.e. the second storage register 340), that is used by the CPU 320 so that it can perform its own functions and is not accessible by apparatus 1, except through the CPU 320 itself.

By way of example, the auxiliary device 300 can have a substantially parallelepiped shape, with sizes included within the following range:
- a length smaller than 7 cm;
- a width smaller than 1.5 cm;
- a thickness smaller than 0.5 cm.

Conveniently, the auxiliary device 300 and apparatus 1 are not connected to each other through a cable, but through insertion of a suitable expansion (interface 310) of the auxiliary device 300 into the USB port (interface 210) of apparatus 1.

To enable better decoding of the second and third partitions 202, 203, the first kernel 201b is provided to communicate with an execution module installed on board the CPU 302.

In more detail, the first kernel 201b is provided to activate the execution module 320a so that the latter retrieves said one or more cryptography keys k1, k2 and supplies them to loader 201a to enable access to the contents of the encrypted partition/s 202, 203.

Preferably, the auxiliary device 300 and apparatus 1 are uniquely associated with each other so that keys k1, k2 contained in the second storage register 340 cannot be supplied to an apparatus other than apparatus 1.

In more detail, apparatus 1 is uniquely identified by an identification code or "imprint" or "hash", calculated based on hardware identification parameters of apparatus 1 (e.g.: mac address of the network card, UUID of the fixed disk, model and speed of the computer used, etc.), that can be utilised to enable selective access to said one or more keys k1, k2.

Likewise, the auxiliary device 300 is identified by a unique serial number that cannot be modified and is inserted into the hardware. During preparation of apparatus 1, the serial number of the auxiliary device 300 is stored in apparatus 1 and the apparatus imprint is inputted into the private memory 340.

In this way, the auxiliary device 300 can be efficiently used only with apparatus 1, and apparatus 1 can decode the encrypted partition (or partitions) 202, 203 only through the auxiliary device 300.

Practically, an association step is first performed in which within the auxiliary device 300, in addition to key/keys k1, k2, the identification code or "imprint" is also stored.

Subsequently, when the first kernel 201b asks the execution module 320a for supply of key k1, k2, the execution module 320a asks the first kernel 201b for the identification code of the apparatus; if the identification code received from the execution module 320a is not the same as the previously stored code, the keys are not supplied and the apparatus cannot operate correctly.

Advantageously, access to the auxiliary device 300 is protected by a further password, stored into the first kernel 201b; should not this password be supplied to the auxiliary device 300, communication between the execution module 320a and apparatus 1 is not allowed.

Preferably, keys k1, k2 are further protected by a cryptography algorithm that in turn always uses different keys. The auxiliary device 300 and apparatus 1 are therefore "synchronised" so as to employ the right keys.

Communication between apparatus 1 and auxiliary device 300 can therefore be encrypted with a symmetric-key algorithm (a "triple des", for example) to be used one time in a cycle. Practically there is a certain number of keys, 100 for example, that are sequentially used in rotation at each operation.

Therefore execution of the same command will produce two different encrypted strings, containing the same message. To enable operation of this mechanism, a perfect synchronism must exist between apparatus 1 and auxiliary device 300. For this reason a "synchronisation" message may be used, which is known both to apparatus 1 and the auxiliary device 300, the function of which is exactly to verify synchronism of the keys and, if necessary, to re-establish this synchronism.

In addition to the above, it is to be noted that the auxiliary device 300 can be supplied in combination with a memory medium 400 provided with a cryptography module 410 and an auxiliary software module 420.

The software module 410 allows one or more partitions 202, 203 of the storage medium 200 of apparatus 1 to be encrypted.

The auxiliary software module 420 allows the first kernel 201b of apparatus 1 to be installed or modified so that when the first kernel 201b starts operating, it asks the auxiliary device 300 (in particular through activation of the execution module 320a) for the key/keys k1, k2 required for decoding the encrypted partition/s 202, 203.

Practically, the memory medium 400 can consist of a CR-ROM or a DVD, on which the above described modules 410, 420 are stored.

Alternatively, the memory medium 400 can be included in the auxiliary device 300 and in particular can be part of a memory incorporated into said auxiliary device 300.

The memory medium 400 is advantageously provided to contain all components necessary for operation of apparatus 1; in other words, said medium 400 can constitute a virtual machine, designed to talk to device 300 (when suitably associated with a physical machine) and to perform the above described security operations.

The invention achieves important advantages.

First of all, the apparatus and system of the invention are characterised by an important reduction in the activation and servicing time and costs.

In particular, the apparatus of the invention can be integrated in a very simple and quick manner into the context of the firm in which it will have to operate.

In addition, this apparatus is such planned that it does not require any type of ordinary or extraordinary servicing, and is able to communicate possible anomalies to a remote service centre in an independent manner, which centre will solve the existing problems in an independent manner too.

In addition, security and reliability levels are ensured as regards the stored data.

## Claims

1. An apparatus for storing and handling electronic documents, comprising:
- a memory (10) for storing one or more electronic documents;
- a storage medium (200) divided into at least one clear partition (201) and an enciphered partition (202, 203), said clear partition (201) containing at least one loader (201a) and a first kernel (201b), said enciphered partition (202, 203) containing at least part of an operating system (202a, 203a);
- a connection interface (210) for connecting an external device to said apparatus (1);
said first kernel (201b) being provided to activate an execution module (320a) residing on board an auxiliary device (300) adapted to be connected to said interface (210), said auxiliary device (300) being provided with:
- a CPU (320), incorporating said execution module (320a);
- a first public storage register (330), directly accessible by said apparatus (1) when the latter is connected to said auxiliary device (300);
- a second storage register (340), associated with said CPU (320) and only accessible through said CPU (320), said second register (340) containing one or more cryptography keys (k1, k2) to decode said enciphered partition (202, 203),
said execution module (320a) being provided to retrieve said one or more keys (k1, k2) from said second storage register (340) and to supply the same to said first kernel (201b) for decoding of said at least one enciphered partition (202, 203).

2. An apparatus as claimed in claim 1, wherein said interface (210) is of the USB (Universal Serial Bus) type.

3. An apparatus as claimed in anyone of the preceding claims, wherein said storage medium (200) comprises a first and a second enciphered partition (202, 203), said enciphered partitions (202, 203) being susceptible of decoding through said one or more keys (k1, k2).

4. An apparatus as claimed in claim 3, wherein the first enciphered partition (202) contains a kernel (202a) and the second enciphered partition (203) contains one or more DLLs or libraries (203a) and/or one or more libraries (203b) and/or one or more application software programs (203).

5. An apparatus as claimed in anyone of the preceding claims, wherein said apparatus (1) and auxiliary device (300) are uniquely associated with each other, so that the keys (k1, k2) contained in said second storage register (340) cannot be supplied to an apparatus other than said apparatus (1).

6. An apparatus as claimed in claim 5, wherein said apparatus (1) is uniquely identified by an identification code, said one or more keys (k1, k2) being selectively accessible depending on said identification code.

7. An auxiliary device comprising:
- an interface (310) for connection with an apparatus (1) for storage and handling of electronic documents, said apparatus (1) being provided with a storage medium (200) divided into at least one clear partition (201), and an enciphered partition (202, 203), said clear partition (201) containing at least one loader (201a) and a first kernel (201b), said enciphered partition (202, 203) containing at least part of an operating system;
- a CPU (320);
- a first public storage register (330), directly accessible by said apparatus (1) when the latter is connected to said auxiliary device (300);
- a second storage register (340), associated with said CPU (320) and only accessible through said CPU (320), said second storage register (340) containing one or more cryptography keys (k1, k2) to decode said enciphered partition (202, 203).

8. A device as claimed in claim 7, wherein said interface (310) is of the USB (Universal Serial Bus) type.

9. A device as claimed in claim 7 or 8, wherein said CPU (302) contains an execution module (320a) to retrieve said one or more keys (k1, k2) from said second storage register (340), said execution module (320a) being adapted to be activated by said first kernel (201b) to supply the latter with said one or more keys (k1, k2) for decoding said at least one enciphered partition (202, 203).

10. A device as claimed in anyone of claims 7 to 9, wherein said apparatus (1) and auxiliary device (300) are uniquely associated with each other, so that the keys (k1, k2) contained in said second storage register (340) cannot be supplied to an apparatus different from said apparatus (1).

11. A device as claimed in claim 9, wherein said apparatus (1) is uniquely identified by an identification code, said one or more keys (k1, k2) being selectively accessible depending on said identification code.

12. A system for storing and handling of electronic documents, comprising:
- an apparatus (1) for storing and handling electronic documents as claimed in anyone of claims 1 to 6;
- an auxiliary device (300) as claimed in anyone of claims 7 to 11.

13. A digital security kit, comprising:
- a memory medium (400) containing a cryptography software module (410) to encrypt at least one partition of a storage medium (200) of an apparatus (1) for storage and handling of electronic documents, thus obtaining at least one enciphered partition (202, 203);
- an auxiliary device (300), provided with:
· an interface (310) for connection with said apparatus (1);
· a CPU (320);
· a first public storage register (330), directly accessible by said apparatus (1) when the latter is connected to said auxiliary device (300);
· a second storage register (340), associated with said CPU (320) and only accessible through said CPU (320), said second storage register (340) containing one or more cryptography keys (k1, k2) for decoding said at least one enciphered partition (202, 203),
said memory medium (400) further comprising an auxiliary software module (420) for setting or modifying a first kernel (201b) on said apparatus (1) so that said first kernel (201b) is designed to ask for and receive from said CPU (320) said one or more cryptography keys (k1, k2) for decoding said at least one enciphered partition (202, 203).
